# EUROPÄISCHE PATENTSCHRIFT

(11) **EP 0 405 375 B1**
(45) Veröffentlichungstag und Bekanntmachung des Hinweises auf die Patenterteilung: **19.01.1994**
(21) Anmeldenummer: 90111948.7
(22) Anmeldetag: 23.06.1990
(51) Int. Cl.: F23J 15/00

(54) **Verfahren zur Verminderung der De-Novo-Synthese von Dioxinen und Furanen**
Method for reducing the de novo synthesis of dioxins and furans
Procédé pour la réduction de la de novo synthèse de dioxines et furanes

(30) Priorität: 29.06.1989 CH 2427/89
(43) Veröffentlichungstag der Anmeldung: 02.01.1991
(73) Patentinhaber: ABB Management AG, 5401 Baden (CH)
(72) Erfinder: Bürgin, Markus Emil, CH-8965 Berikon (CH); Zweifel, Martin Rudolf, CH-5430 Wettingen (CH)
(74) Vertreter: Wagner, Wolfgang, Dr. Phil., Dipl.-Phys.

(56) Entgegenhaltungen:
- EP-A- 0 122 415
- DE-A- 3 527 615
- US-A- 4 087 497
- US-A- 4 215 095
- US-A- 4 325 922
- POWER, Band 131, Nr. 10, Oktober 1987, Seiten 11-18; J. MAKANSI: "Traditional control processes handle new pollutants"

## Beschreibung

Die Erfindung betrifft ein verfahren zur Verminderung der De-Novo-Synthese von Dioxinen und Furanen bei der Abkühlung von bei der Verbrennung von Müll entstehenden Rauchgasen.

Bei der Verbrennung von Müll in einem Verbrennungsofen einer Müllverbrennungsanlage werden mit Flugascheteilchen untermischte Rauchgase mit Temperaturen von über 1000°C gebildet, welche gewöhnlich unter Ausnützung ihrer Energie zur Dampferzeugung auf eine Temperatur von unter 250°C abgekühlt werden. Anschliessend erfolgt die Reinigung der Rauchgase mittels Gewebe- oder Elektrofilter und Nasswäscher.

Problematisch ist dabei die Bildung von hochgiftigen Dioxinen und Furanen durch De-Novo-Synthese in einem Temperaturbereich von ca. 450°C bis 250°C, die zwar auch durch eine vollständige Verbrennung der Ausgangsstoffe der Synthese durch Nachverbrennung mit Eindüsung von Sauerstoff weitgehend unterbunden werden kann, was aber den Einbau einer Nachbrennkammer bedingt.

Hier schafft nun die Erfindung Abhilfe, indem die Rauchgase in einer Kühlstufe auf etwa 450°C abgekühlt werden und dann zur raschen Ueberwindung des kritischen Temperaturbereichs durch Eindüsung von Wasser schockartig auf 200 - 250°C gebracht und schliesslich weiter gekühlt, entstaubt und gereinigt werden, sodass die De-Novo-Synthese praktisch vollständig unterbunden wird.

Das schockartige Abkühlen von Rauchgasen durch Eindüsen von Wasser oder wässriger Salzsäure (Quenchen) wird sonst insbesondere bei der Verbrennung chlorierter Kohlenwasserstoffe zur Entfernung von Chlor aus den Rauchgasen angewandt, wie z. B. aus der US-A-4 215 095 bekannt ist. Die Rauchgase werden dabei von über 1000°C auf 100 - 200°C abgekühlt. Eine Quenche, d. h. eine Einrichtung zum Abkühlen der Rauchgase von ca. 1400°C auf unter 100°C durch Quenchen ist auch in der EP-A-0 122 415 beschrieben. In beiden Fällen dient das Quenchen jedoch einem anderen Zweck, ausserdem durchlaufen die Rauchgase eine sehr grosse Temperaturspanne ohne Ausnutzung ihrer thermischen Energie.

Demgegenüber ist das erfindungsgemässe Verfahren genau auf die Vermeidung der De-Novo-Synthese abgestimmt. Nur der diesbezüglich kritische Temperaturbereich wird sehr rasch durch Quenchen überwunden, während im übrigen Bereich die bei der Abkühlung frei werdende Energie genutzt werden kann. Zusätzlicher baulicher Aufwand ist nicht erforderlich.

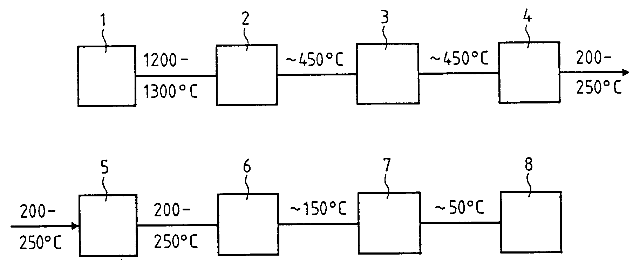

Die Erfindung ist in der Zeichnung in einem Ausführungsbeispiel dargestellt und nachfolgend beschrieben.

Die Figur zeigt ein Blockdiagramm einer Anlage, in welcher das erfindungsgemässe Verfahren eingesetzt wird.

Die Erfindung geht von der Ueberlegung aus, dass die Umweltbelastung einer Müllverbrennungsanlage auch dadurch stark verringert werden kann, wenn eine De Novo-Synthese vermieden wird, in welcher sich aus den Rauchgasen die schädlichen Dioxine und Furane bilden.

In der Figur ist eine solche Anlage als Blockdiagramm dargestellt, wobei die jeweils erreichten Temperaturen zwischen den einzelnen Blöcken eingetragen sind. Im Feuerraum 1 des Verbrennungsofens entstehen Rauchgase, die eine Temperatur von 1000 - 1200°C aufweisen. Diese werden einer Dampferzeugungsanlage 2 zugeleitet. Diese umfasst im wesentlichen die Anlageteile der Hochtemperaturstufe mit dem Dampfkessel, dem Ueberhitzer und dem Zwischenüberhitzer. Nach Verlassen dieser Hochtemperaturstufe weisen die Rauchgase eine Temperatur von ca. 450°C auf. Bei dieser Temperatur wird in einer Kammer 3 die Stickoxidbehandlung, beispielsweise mit Amoniak, durchgeführt. Auf diese Behandlung kann gegebenenfalls verzichtet werden.

Die Rauchgase gelangen nun mit einer Temperatur von etwa 450°C in eine Kammer 4, in der sie durch Wassereindüsung schockgekühlt werden. Bei dieser Behandlung, die auch als Quenchen bezeichnet wird, wird die Temperatur der Rauchgase sehr rasch auf 250°C herabgesetzt. Dieser rasche Temperatursprung hat zur Folge, dass die Bildung von Dioxinen und Furanen praktisch vermieden wird, auch wenn in den Rauchgasen die Voraussetzungen vorhanden sind, d.h. die Anwesenheit von Sauerstoff und Wasserdampf in der Gasphase und aktive, organische Kohlenstoffpartikel in den Flugascheteilchen, die mit anorganischen Chloriden von Alkalien/Erdalkalien mit Beteiligung von Metallsalzen, z.B. Kupfer (II)-Chlorid, reagieren können. Wegen der raschen Abkühlung der Rauchgase fehlt eine ausreichende Reaktionszeit für die Bildung von Dioxinen und Furanen gemäss der De Novo-Synthese.

Beim Verlassen der Kammer 4 nach dem Quenchen weisen die Rauchgase noch eine Temperatur von ca. 250°C auf und werden einer Entstaubungsanlage 5 zugeführt. Diese Anlage besteht im wesentlichen aus Gewebe- oder Elektrofiltern. Nach der Staubabscheidung folgt eine weitere Gewinnung von Wärmeenergie in einer Niedertemperaturstufe 6, beispielsweise mit einer Vorwärmeeinrichtung für das Kesselspeisewasser. Die Rauchgase verlassen die Niedertemperaturstufe 6 mit etwa 150°C. Es erfolgt nun eine Nass-Rauchgasreinigung 7, durch welche Chlorwasserstoff, Schwefeldioxid und Fluorwasserstoff ausgeschieden werden. Durch die Nass-Rauchgasreinigung werden die Rauchgase auf ca. 50°C gekühlt, worauf sie durch das Kamin 8 ins Freie gelangen.

Die Behandlungsstufen nach dem Quenchen können auch variiert werden. So kann nach dem Quenchen die Rauchgasreinigung 7, beispielsweise durch eine Quasi-Trocken-Rauchgasreinigung, etwa durch Eindüsung von Kalk, durchgeführt werden, durch welche die Rauchgastemperatur auf etwa 140°C sinkt. Anschliessend erfolgt dann die Wärmenutzung in der Niedertemperaturstufe 6, wobei die Temperatur in zwei Phasen bis auf 50°C gekühlt wird.

Wesentlich ist es jedoch, dass zwischen der Hochtemperaturstufe 2 und der Niedertemperaturstufe 6 die rasche Kühlung der Rauchgase durchgeführt wird, durch welche das erneute Entstehen von Dioxinen und Furanen zuverlässig vermieden wird.

## Patentansprüche

1. Verfahren zur Verminderung der De-Novo-Synthese von Dioxinen und Furanen bei der Abkühlung von bei der Verbrennung von Müll in einem Ofen entstehenden Rauchgasen, wobei die Rauchgase
- in einer ersten Kühlstufe von ihrer Austrittstemperatur aus dem Feuerraum des Ofens von 1000°C - 1200°C auf eine Temperatur von etwa 450°C abgekühlt werden,
- darauf durch Eindüsung von Wasser schockartig auf 200°C - 250°C abgekühlt werden,
- und schliesslich weiter gekühlt, entstaubt und gereinigt werden.

2. Verfahren nach Anspruch 1, **dadurch gekennzeichnet, dass** die von den Rauchgasen bei der Abkühlung von 1000°C - 1200°C auf etwa 450°C abgegebene Wärme in einer Hochtemperaturstufe genutzt wird.

3. Verfahren nach Anspruch 1 oder 2, **dadurch gekennzeichnet, dass** die Rauchgase nach der schockartigen Abkühlung bei einer Rauchgasreinigung, beispielsweise durch Eindüsung von Kalk, von 200°C - 250°C auf etwa 140°C und unter Wärmenutzung in einer Niedertemperaturstufe von etwa 140°C auf etwa 50°C gekühlt werden.

## Claims

1. A method for reducing the de novo synthesis of dioxins and furans by cooling flue gases produced when burning refuse in a furnace, wherein the flue gases
- are cooled in a first cooling stage from their emergence temperature from the combustion chamber of the furnace of 1000°C-1200°C to a temperature of approximately 450°C,
- then cooled in a shock-like manner to 200°C - 250°C by injecting water through a nozzle,
- and finally cooled further, freed from dust and cleaned.

2. A method according to claim 1, characterised in that the heat given off by the flue gases when cooling from 1000°C-1200°C to approximately 450°C is used in a high-temperature stage.

3. A method according to claim 1 or 2, characterised in that, after the shock-like cooling, the flue gases are cooled, from 200°C-250°C to approximately 140°C in a flue gas cleaning, for example by injection of lime through a nozzle and, from approximately 140°C to approximately 50°C in a low temperature stage with utilisation of heat.

## Revendications

1. Procédé pour la réduction de la synthèse de novo de dioxines et de furannes lors du refroidissement de gaz brûlés qui se forment lors de l'incinération d'ordures ménagères dans un four, dans lequel les gaz brûlés
- sont refroidis à une température d'environ 450°C dans une première étape de refroidissement à partir de leur température de sortie du foyer du four de 1000°C-1200°C,
- sont ensuite refroidis de manière brutale à 200°C-250°C par l'introduction d'eau par pulvérisation,
- et sont enfin refroidis ultérieurement, dépoussierés et purifiés.

2. Procédé selon la revendication 1, caractérisé en ce que la chaleur dégagée par les gaz brûlés lors du refroidissement de 1000°C-1200°C à environ 450°C est utilisée dans une étape à température élevée.

3. Procédé selon la revendication 1 ou 2, caractérisé en ce que, après le refroidissement brusque, les gaz brûlés sont refroidis de 200°C-250°C à environ 140°C lors d'une purification des gaz brûlés par exemple par l'introduction de chaux par pulvérisation, et de 140°C à environ 50°C avec utilisation de la chaleur dans une étape à basse température.
